# DEMANDE DE BREVET EUROPEEN

(11) **EP 3 281 871 A1**
(43) Date de publication de la demande: **14.02.2018**
(21) Numéro de dépôt: 17185762.6
(22) Date de dépôt: 10.08.2017
(51) Int. Cl.: B64C 39/02

(54) **PROCÉDÉ DE CAPTURE D'UNE VIDÉO PAR UN DRONE À VOILURE FIXE, PROGRAMME D'ORDINATEUR, ET SYSTÈME ÉLECTRONIQUE DE CAPTURE D'UNE VIDÉO ASSOCIÉS**

(30) Priorité: 11.08.2016 FR 1657728
(71) Demandeur: Parrot Drones, 75010 Paris (FR)
(72) Inventeur: SEYDOUX, Henri, 75017 PARIS (FR); PIRAT, Frédéric, 75011 PARIS (FR); CHAUVEUR, Arnaud, 92500 RUEIL MALMAISON (FR)
(74) Mandataire: Lavoix

(57) **Abrégé**

L'invention concerne un procédé de capture d'une vidéo à l'aide d'une caméra embarquée sur un drone (14) à voilure fixe, la caméra comprenant un capteur d'image(s) (28), le drone (14) à voilure fixe comprenant une centrale inertielle (56) configurée pour mesurer l'angle de roulis, de l'angle de tangage et/ou l'angle de lacet du drone à voilure fixe.

Ce procédé comprend l'obtention (106) d'image(s) correspondant à une zone du capteur de dimensions réduites par rapport à celles du capteur et associée à un repère de prise de vue, la position de la zone étant déterminée (108) à partir de l'orientation du repère de prise de vue obtenue (110) en fonction de l'angle de roulis, de l'angle de tangage et/ou de l'angle de lacet du drone à voilure fixe.

## Description

La présente invention concerne un procédé de capture d'une vidéo à l'aide d'une caméra embarquée sur un drone à voilure fixe, la caméra comprenant un capteur d'image(s).

En particulier, le drone à voilure fixe, est notamment de type "aile volante". Dans la suite, un « drone » désigne un aéronef sans pilote à bord. Un drone est autonome ou piloté à distance notamment à l'aide d'une manette de commande.

L'invention concerne également un programme d'ordinateur comportant des instructions logicielles qui, lorsqu'elles sont exécutées par un ordinateur, mettent en oeuvre un tel procédé de capture d'une vidéo.

L'invention concerne également un système électronique de capture d'une vidéo comprenant un drone à voilure fixe et une caméra embarquée sur le drone à voilure fixe, la caméra comprenant un capteur d'image(s).

On connaît les drones à voilure tournante, par exemple de type quadricoptère, qui peuvent tenir un point fixe et évoluer aussi lentement que souhaité, ce qui les rend beaucoup faciles à piloter même par des utilisateurs inexpérimentés.

Les drones à voilure fixe, tout particulièrement ceux de type "aile volante", peuvent évoluer à des vitesses élevées, typiquement jusqu'à 80 km/h, et sont, en comparaison avec les drones à voilure tournante, assez difficiles à piloter compte tenu de leur très grande réactivité aux instructions de pilotage envoyées depuis la manette de commande, et de la nécessité de conserver une vitesse de vol minimale, supérieure à la vitesse de décrochage.

Ces difficultés sont accrues de façon particulièrement critique dans le cas des drones de type aile volante. En effet, ces drones sont dépourvus d'empennage et de dérive, et ne disposent donc d'aucune surface verticale mobile de contrôle de direction (comme un volet placé sur la dérive, dans le cas d'un aéronef conventionnel). L'aile volante n'est pourvue, comme gouvernes, que de deux volets mobiles placés sur les bords de fuite des ailes : des déplacements de ces volets dans le même sens modifient l'attitude en tangage (angle θ) du drone, tandis que des déplacements en sens opposés de ces deux volets modifient l'attitude en roulis (angle ϕ) du drone, et celui-ci ne dispose pas d'autre moyen aérodynamique de contrôle de trajectoire, mis à part la commande du régime moteur.

Pour faire évoluer le drone, l'utilisateur doit donc contrôler depuis sa manette de commande la position des deux volets pour modifier l'attitude en tangage et en roulis du drone, modification éventuellement accompagnée d'une augmentation ou d'une diminution de la vitesse.

Un tel mode de pilotage est tout sauf facile et intuitif, et la difficulté est en outre accrue par le caractère très instable, en particulier en virage, d'une aile volante par rapport à un aéronef muni d'une dérive.

Des solutions ont été développées pour permettre à un utilisateur, même novice, d'optimiser le pilotage de drone à voilure fixe, en particulier un drone de type aile volante. De telles solutions, sont basées sur l'utilisation par l'utilisateur de commandes simplifiées (ci-après « instructions de pilotage » du type « tourner à droite » ou « tourner à gauche », « monter » ou « descendre », « accélérer » ou « ralentir » ces instructions étant générées par exemple à l'aide de manches à balai de la manette de commande.

Il est par ailleurs possible de munir un tel drone à voilure fixe d'équipements pour réaliser des tâches particulières. Il est notamment possible d'équiper le drone à voilure fixe d'une caméra possédant un capteur d'image(s), pour prendre des vidéos.

Le capteur d'image(s) est, par exemple, associé à un objectif hémisphérique de type hypergone (de l'anglais *fisheye*), c'est-à-dire couvrant un champ visuel d'un grand angle de vue, de l'ordre 180° ou plus. La caméra comprend le capteur d'image(s) et l'objectif disposé devant le capteur d'image(s) de façon que le capteur d'image(s) capte les images à travers l'objectif.

La caméra vidéo du drone est utilisable pour un pilotage en "mode immersif', c'est-à-dire où l'utilisateur se sert de l'image de la caméra de la même façon que s'il se trouvait lui-même à bord du drone. Elle peut également servir à capter des séquences d'images d'une scène vers laquelle se dirige le drone.

Il est souhaitable que les images obtenues à l'aide de la caméra soient obtenues selon un repère de prise de vue pertinent par rapport à la phase de vol du drone, et ce sans modifier l'orientation physique de la caméra, qui reste immobile par rapport au drone à voilure fixe.

Dans la suite, « phase de vol », désigne un état de vol (i.e. un scénario de vol) caractéristique du drone, comprenant l'absence de vol (i.e. le drone à voilure fixe est posé), un état de vol étant identifié par un ensemble de paramètres, distinct d'un état de vol à un autre.

En effet, en fonction de la phase de vol du drone à voilure fixe, à savoir par exemple une phase de vol lors de laquelle le drone à voilure fixe effectue un virage, un vol en ligne droite, une ascension, une descente, un décollage, un atterrissage, conformément aux instructions de pilotage de l'utilisateur, il n'est pas pertinent que le repère de prise de vue, imposant la direction de pointage de la caméra reste invariant.

Un des buts de l'invention est alors de proposer un procédé de capture d'une vidéo à l'aide d'une caméra embarquée sur un drone à voilure fixe, la caméra comprenant un capteur d'image(s), permettant à l'utilisateur d'acquérir des prises de vues adaptées aux phases de vol afin de rendre la vidéo plus agréable notamment lorsque l'utilisateur porte un système de visualisation immersive (également appelée « vision FPV » de l'anglais *First Person View*).

A cet effet, l'invention a pour objet un procédé de capture d'une vidéo à l'aide d'un d'une caméra embarquée sur un drone à voilure fixe, la caméra comprenant un capteur d'image(s), le drone à voilure fixe comprenant une centrale inertielle configurée pour mesurer l'angle de roulis, l'angle de tangage et/ou de l'angle de lacet du drone à voilure fixe, le procédé comprenant l'obtention d'image(s) correspondant à une zone du capteur de dimensions réduites par rapport à celles du capteur et associée à un repère de prise de vue, la position de la zone étant déterminée à partir de l'orientation du repère de prise de vue obtenue en fonction de l'angle de roulis, de l'angle de tangage et/ou de l'angle de lacet du drone à voilure fixe.

Le procédé de capture d'une vidéo selon l'invention permet d'obtenir une vidéo à l'aide de la caméra embarquée sur un drone à voilure fixe dirigée dans une direction optimisée quelle que soit la phase (i.e. l'état) de vol dont l'attitude est caractérisée par au moins un des angles d'Euler à savoir l'angle de tangage, l'angle de roulis et l'angle de lacet.

Autrement dit, le procédé selon l'invention permet un ajustement de la direction visée par la caméra embarquée sur le drone à voilure fixe en fonction de la phase de vol en cours.

La prise de vue est donc optimisée quelle que soit la phase de vol du drone à voilure fixe. La restitution de la vidéo est alors améliorée pour l'utilisateur. On obtient également une meilleure assistance de l'utilisateur lors du pilotage notamment lorsque l'utilisateur base essentiellement son pilotage sur la restitution en temps réel des images filmées par la caméra.

Suivant d'autres aspects avantageux de l'invention, le procédé de capture d'une vidéo comporte l'une ou plusieurs des caractéristiques suivantes, prises isolément ou suivant toutes les combinaisons techniquement possibles :
- lorsque le drone est posé, l'orientation du repère de prise de vue est égale à celle du drone,
- au cours d'une phase de décollage, du drone et/ou au cours d'une phase d'atterrissage du drone, l'orientation du repère de prise de vue est égale à l'attitude du drone filtrée par un filtre passe-bas,
- lorsque le drone vole selon une trajectoire rectiligne et à altitude constante, le repère de prise de vue présente un angle de roulis nul, un angle de tangage nul et un angle de lacet configuré pour orienter la prise de vue dans une direction fixe correspondant à la direction de la course du drone à la fin du dernier virage effectué par le drone,
- lorsque le drone effectue un virage, le repère de prise de vue présente un angle de roulis correspondant à une consigne de roulis suivie par le drone, un angle de tangage nul, et un angle de lacet égal à l'angle de lacet du drone filtré par un filtre passe-bas,
- lorsque le drone effectue une ascension ou une descente selon une trajectoire rectiligne, le repère de prise de vue présente un angle de roulis nul, un angle de tangage égal à une consigne de tangage suivie par le drone, et un angle de lacet déterminé pour orienter la prise de vue dans une direction fixe correspondant à la direction de la course du drone à la fin du dernier virage effectué par le drone,
- lorsque le drone effectue une ascension ou une descente en virage, le repère de prise de vue présente un angle de roulis correspondant à une consigne de roulis suivie par le drone, un angle de tangage égal à une consigne de tangage suivie par le drone, et un angle de lacet égal à l'angle de lacet du drone filtré par un filtre passe-bas,
- lorsque le drone vole selon une trajectoire rectiligne et à altitude constante et initie un virage, le repère de prise de vue présente un angle de roulis égal à une consigne de roulis suivie par le drone, un angle de tangage nul, et un angle de lacet déterminé pour orienter la prise de vue dans une direction fixe correspondant à la direction de la course du drone à la fin du dernier virage effectué par le drone,
- lorsque le drone effectue une ascension ou une descente en suivant une trajectoire rectiligne et initie un virage, le repère de prise de vue présente un angle de roulis égal à une consigne de roulis suivie par le drone, un angle de tangage égal à une consigne de tangage suivie par le drone, et un angle de lacet déterminé pour orienter la prise de vue dans une direction fixe correspondant à la direction de la course du drone à la fin du dernier virage effectué par le drone,
- lorsque le drone vole selon une trajectoire rectiligne et à altitude constante avec un désalignement par rapport à la trajectoire cible, le repère de prise de vue présente un angle de roulis nul, un angle de tangage nul, et un angle de lacet égal à l'angle de lacet du drone filtré par un filtre passe-bas
- lorsque le drone effectue une ascension ou une descente en suivant une trajectoire rectiligne avec un désalignement par rapport à la trajectoire cible, le repère de prise de vue présente un angle de roulis nul, un angle de tangage égal à une consigne de tangage suivie par le drone, et un angle de lacet égal à l'angle de lacet du drone filtré par un filtre passe-bas,
- lors de la période de transition entre au moins deux orientations de repère de prise de vue associées respectivement à au moins deux phases de vols, l'orientation du repère de prise de vue pendant la période de transition est obtenue par application d'une interpolation linéaire sphérique comprenant au moins une pondération par au moins un coefficient de pondération dont la valeur évolue progressivement au cours de la période de transition.

L'invention a également pour objet un programme d'ordinateur comportant des instructions logicielles qui, lorsqu'elles sont exécutées par un ordinateur, mettent en oeuvre un procédé tel que défini ci-dessus.

L'invention a également pour objet un système électronique de capture d'une vidéo comprenant un drone à voilure fixe et une caméra embarquée sur le drone, la caméra comprenant un capteur d'image(s), le drone à voilure fixe comprenant une centrale inertielle configurée pour mesurer l'angle de roulis, l'angle de tangage et/ou l'angle de lacet du drone à voilure fixe, le système électronique de capture vidéo comprenant en outre un module d'obtention configuré pour obtenir au moins une image correspondant à une zone du capteur de dimensions réduites par rapport à celles du capteur et associée à un repère de prise de vue, le module d'obtention étant configuré pour déterminer la position de la zone à partir de l'orientation du repère de prise de vue obtenue en fonction de l'angle de roulis, de l'angle de tangage et/ou de l'angle de lacet du drone à voilure fixe.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue en perspective d'un système électronique de capture vidéo selon l'invention, comprenant un drone à voilure fixe de type aile volante, évoluant dans les airs sous le contrôle d'un équipement de télécommande distant;
- la figure 2 est une représentation schématique partielle des modules constituant le système électronique de capture d'une vidéo selon l'invention;
- la figure 3 est un schéma par blocs fonctionnels d'un pilote automatique intégré au drone à voilure fixe;
- la figure 4 est un organigramme d'un procédé de capture d'une vidéo selon l'invention; et
- la figure 5 est une représentation schématique de la détermination de l'orientation du repère de prise de vue lors d'une transition entre au moins deux phases de vol distinctes;
- la figure 6 est une représentation schématique des images correspondant respectivement au champ d'ensemble de la caméra obtenu sur le capteur d'image(s), à la projection de l'image obtenue par l'objectif associé au capteur d'image, et à la zone dont la position est déterminée selon l'invention.

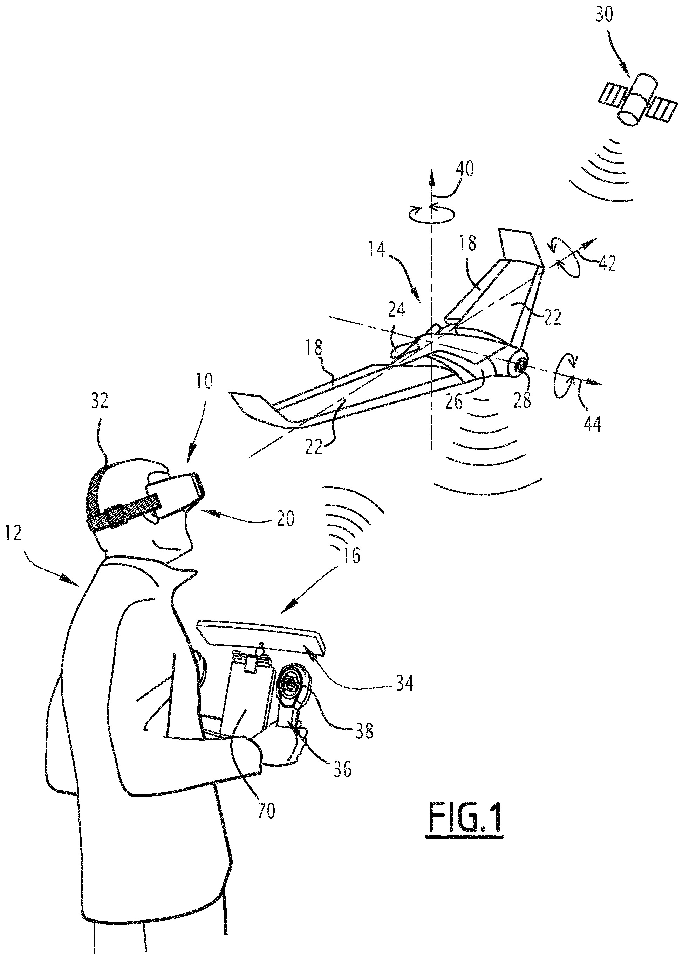

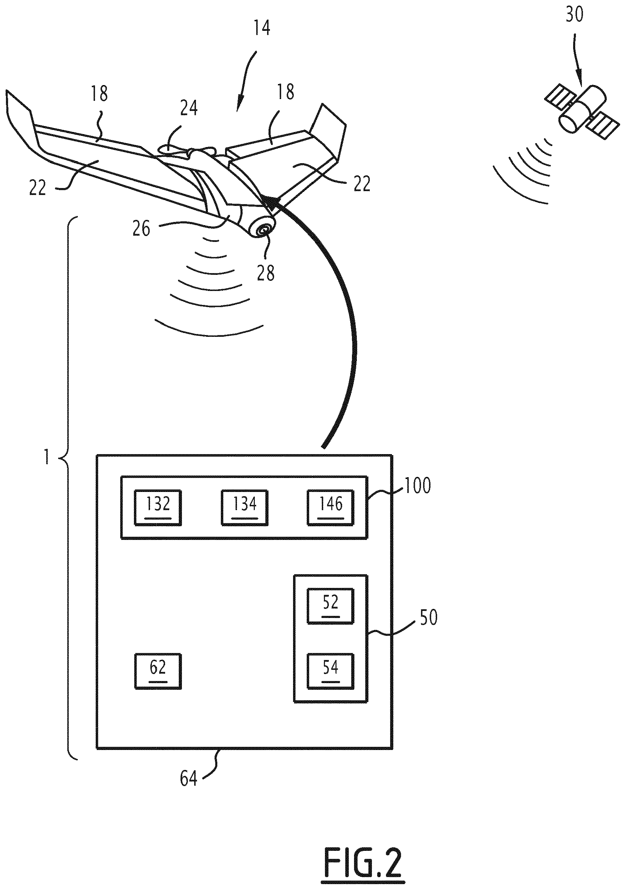

Sur les figures 1 et 2, un système électronique de capture d'une vidéo 1 permet à un utilisateur 12 d'optimiser l'obtention d'images à l'aide d'une caméra embarquée sur un drone 14, en particulier un drone à voilure fixe notamment de type "aile volante".

Le drone à voilure fixe 14 comprend un corps de drone (fuselage) 26 muni en partie arrière d'une hélice 24 et latéralement de deux ailes 22, ces ailes prolongeant le corps de drone 26 dans la configuration illustrée de type "aile volante". Du côté du bord de fuite, les ailes 22 sont munies de gouvernes 18 orientables au moyen de servomécanismes pour contrôler la trajectoire du drone.

En vol, le drone 10 évolue en :
a) rotation autour d'un axe de tangage 42, pour modifier l'altitude
b) rotation autour d'un axe de roulis 44, pour tourner à droite ou à gauche ; et
c) vitesse, par changement du régime des gaz,

Le drone 14 est également muni d'un capteur d'image(s) 28 configuré pour acquérir au moins une image d'une scène, et un module de transmission, non représenté, configuré pour transmettre, de préférence par ondes radioélectriques, à destination d'un équipement électronique, tel que le module de réception, non représenté, du système électronique de visualisation 10, le module de réception, non représenté, de la manette de commande 16 ou encore le module de réception de la tablette 70 numérique multimédia à écran tactile montée sur la manette 16, non représenté, la ou les images acquises par le capteur d'image(s) 28.

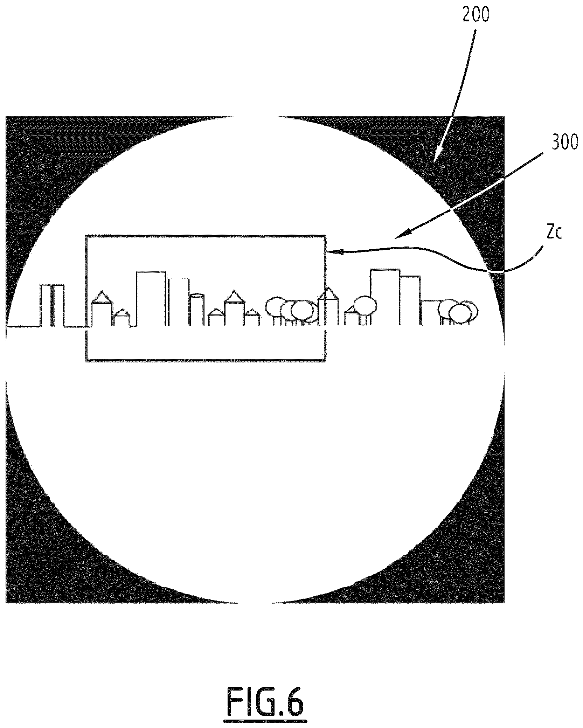

Le capteur d'image(s) 28 est, par exemple, associé à un objectif hémisphérique de type hypergone (de l'anglais *fisheye*), c'est-à-dire couvrant un champ visuel d'un grand angle de vue, de l'ordre de 180° ou plus. La projection 300 de l'image obtenue par l'objectif hypergone associé au capteur d'image(s) 28 est représentée sur la figure 6. La caméra comprend le capteur d'image(s) 28 et l'objectif disposé devant le capteur d'image(s) 28 de façon que le capteur d'image(s) 28 capte les images à travers l'objectif.

Dans l'exemple de la figure 2, le drone à voilure fixe 14 comprend en outre une unité de traitement d'informations 50, formée par exemple d'une mémoire 52 et d'un processeur 54 associé à la mémoire 52.

Le drone à voilure fixe 14 comprend également une centrale inertielle 100 configurée pour mesurer l'angle de roulis ϕ, l'angle de tangage θ et/ou l'angle de lacet ψ du drone à voilure fixe 14.

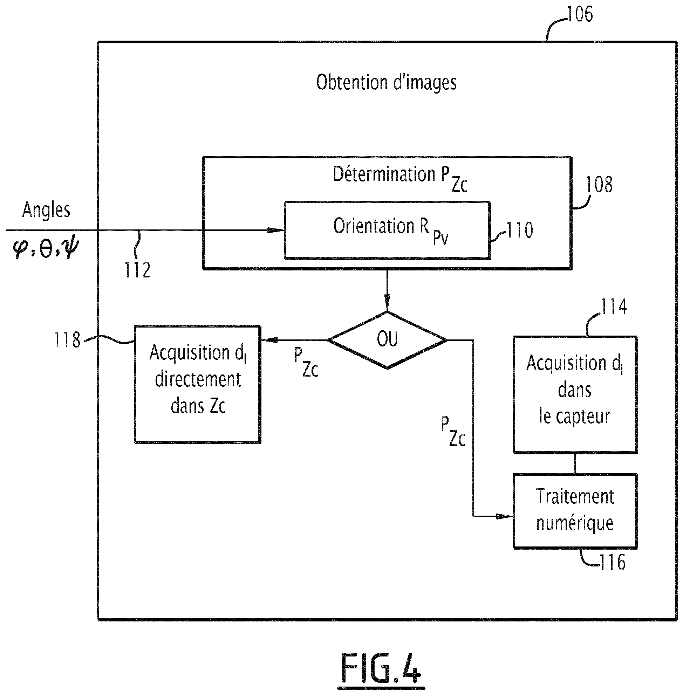

Dans l'exemple de la figure 2, la centrale inertielle 100 comprend le(s) gyromètre(s) 132, l'accéléromètre(s) 134 et le circuit d'estimation d'attitude 146 tels qu'également représentés sur la figure 3 illustrant un exemple de schéma par blocs fonctionnels d'un pilote automatique intégré au drone à voilure fixe.

Le drone à voilure fixe 14 comprend également un module d'obtention 62 pour obtenir au moins une image correspondant à une zone Zc du capteur de dimensions réduites par rapport à celles du capteur et associée à un repère de prise de vue, le module d'obtention 62 étant configuré pour déterminer la position P_{Zc} de la zone Zc à partir de l'orientation du repère de prise de vue obtenue en fonction de l'angle de roulis, de l'angle de tangage et/ou de l'angle de lacet du drone à voilure fixe.

Le capteur d'image(s) 28 est l'organe photosensible de la caméra. Il s'agit par exemple d'un capteur CMOS. La zone Zc est une fraction du capteur d'image(s) 28.

Le capteur d'image(s) 28 associé à l'objectif est apte à fournir une image d'ensemble correspondant à un champ d'ensemble 200 de la caméra telle que représentée sur la figure 6. La zone Zc du capteur d'image(s) 28 correspond à une fenêtre du champ d'ensemble de dimensions réduites par rapport à celles du champ d'ensemble. L'image acquise correspondant à la zone Zc est l'image qui serait acquise par cette zone Zc, sans utiliser le reste du capteur d'image(s).

L'obtention d'une image à partir d'une zone Zc de dimensions réduites du capteur d'image(s) permet d'orienter virtuellement l'axe de prise de vue de la caméra dans la direction de la fenêtre du champ d'ensemble de la caméra correspondant à la zone Zc de dimensions réduites, sans modifier l'orientation physique de la caméra, qui reste immobile par rapport au drone à voilure fixe 14.

Selon une première variante, le module d'obtention 62 comprend un module d'acquisition de données d'image d_{I}, non représenté, configuré pour acquérir des données d'image à partir de l'ensemble de la surface du capteur d'image(s), et un module de traitement numérique des données d'images, non représenté, configuré pour délivrer des images de vidéo correspondant uniquement à la zone Zc, la position de la zone Zc étant déterminée à partir de l'orientation du repère de prise de vue obtenue en fonction de l'angle de roulis, de l'angle de tangage et/ou de l'angle de lacet du drone à voilure fixe 14.

Selon une deuxième variante, le module d'obtention 62 comprend uniquement un module d'acquisition de données d'image, non représenté, configuré pour acquérir des données d'image uniquement dans la zone Zc au cours de la réalisation vidéo, la position de la zone Zc étant déterminée à partir de l'orientation du repère de prise de vue obtenue en fonction de l'angle de roulis, de l'angle de tangage et/ou de l'angle de lacet du drone à voilure fixe 14.

Dans l'exemple de la figure 2, la centrale inertielle 100 configurée pour mesurer l'angle de roulis, l'angle de tangage et/ou de l'angle de lacet du drone à voilure fixe et le module d'obtention 62 configuré pour obtenir au moins une image sont réalisés chacun de sorte à comprendre un logiciel exécutable par le processeur 54. La mémoire 52 de l'unité de traitement d'informations 50 est alors apte à stocker un logiciel de mesure configuré pour mesurer l'attitude instantanée du drone à voilure fixe 14 définie par l'angle de roulis, l'angle de tangage et/ou l'angle de lacet, et un logiciel d'obtention configuré pour obtenir au moins une image correspondant à une zone Zc de dimensions réduites par rapport à celles du capteur d'image(s) 28, la position de la zone Zc étant déterminée à partir de l'orientation du repère de prise de vue obtenue en fonction de l'angle de roulis, de l'angle de tangage et/ou de l'angle de lacet du drone à voilure fixe 14, et/ou, selon la phase de vol, à partir d'une consigne de roulis et/ou une consigne de tangage.

Le processeur 54 de l'unité de traitement d'informations 50 est alors apte à exécuter le logiciel de mesure et le logiciel d'obtention au moyen d'un programme d'ordinateur.

Un système électronique de visualisation 10 permet à l'utilisateur 12 de visualiser des images, notamment des images de la vidéo reçue de la part du drone à voilure fixe 14.

Le système électronique de visualisation 10 comprend un appareil électronique, par exemple, un ordiphone (de l'anglais *smartphone*), muni d'un écran d'affichage, et un casque 20 comportant un support de réception de l'appareil électronique, une surface d'appui contre le visage de l'utilisateur 12, en regard de ses yeux, et deux dispositifs optiques disposés entre le support de réception et la surface d'appui.

Le casque 20 comporte en outre une sangle de maintien 32 permettant de maintenir le casque 20 sur la tête de l'utilisateur 12.

L'appareil électronique est amovible par rapport au casque 20 ou intégré au casque 20.

Le système électronique de visualisation 10 est, par exemple, relié à une manette 16 via une liaison de données, non représentée, la liaison de données étant une liaison radioélectrique ou encore une liaison filaire.

Dans l'exemple de la figure 1, le système électronique de visualisation 10 comprend en outre un module de réception, non représenté, configuré pour recevoir au moins une image de la part du drone à voilure fixe 14, la transmission de l'image étant effectuée de préférence par ondes radioélectriques.

En variante, non représentée, la manette 16 est configurée pour recevoir au moins une image de la part du drone à voilure fixe 14 et la retransmettre au système électronique de visualisation 10.

Le système de visualisation 10 est par exemple un système de visualisation en réalité virtuelle, c'est-à-dire un système permettant à l'utilisateur 12 de visualiser une image dans son champ visuel, avec un angle de champ de vision, également appelé FOV (de l'anglais *Field Of Vision,* ou *Field Of View*), ayant une valeur importante, typiquement supérieure à 90°, de préférence supérieure ou égale à 100°, afin de procurer une vision immersive (également appelée « vision FPV » de l'anglais *First Person View)* pour l'utilisateur 12.

La manette 16 est connue en soi, et permet par exemple de piloter le drone à voilure fixe 14. La manette 16 comprend deux poignées de préhension 36, chacune étant destinée à être saisie par une main respective de l'utilisateur 12, une pluralité d'organes de commande, comprenant ici deux manches à balai 38 (de l'anglais *joystick*), chacun étant disposé à proximité d'une poignée de préhension 36 respective et étant destiné à être actionné par l'utilisateur 12, de préférence par un pouce respectif.

La manette 16 comprend également une antenne radioélectrique 34 et un émetteur-récepteur radioélectrique, non représenté, pour l'échange de données par ondes radioélectriques avec le drone à voilure fixe 14, à la fois en liaison montante et en liaison descendante.

En complément, ou à titre d'alternative au regard du système de visualisation 10, une tablette 70 numérique multimédia à écran tactile est montée sur la manette 16 pour assister l'utilisateur 12 lors du pilotage du drone à voilure fixe 14.

La manette 16 est configurée pour transmettre les instructions de pilotage 130 de l'utilisateur à un pilote automatique intégré au drone à voilure fixe, dont un exemple de schéma par blocs fonctionnels est représenté sur la figure 3.

Le pilotage d'un drone à voilure fixe 14, notamment de type "aile volante", est assez difficile compte tenu de sa très grande réactivité aux instructions de pilotage envoyées depuis la manette 16, et de la nécessité de conserver une vitesse de vol minimale, supérieure à la vitesse de décrochage.

Le pilote automatique, dont un exemple de schéma par blocs fonctionnels est représenté sur la figure 3 permet l'utilisation par l'utilisateur de commandes simplifiées (ci-après « instructions de pilotage » du type « tourner à droite » ou « tourner à gauche », « monter » ou « descendre », « accélérer » ou « ralentir » ces instructions étant générées par exemple à l'aide de manches à balai de la manette 16.Dans le pilote automatique, par exemple illustré par la figure 3, un module décodeur, non représenté, est configuré pour recevoir les instructions de pilotage 130.

La sortie du décodeur est connectée aux entrées d'un module de calcul de consignes d'angles 136, d'un module de calcul de consignes de vitesse 138, d'un module de calcul de consigne d'altitude 140 formant le pilote automatique, respectivement configurés pour convertir les instructions de pilotage 130 de l'utilisateur en consignes d'attitude du drone, c'est-à-dire en consignes d'angle de roulis, consignes d'angle de tangage, consignes de vitesse et consignes d'altitude, en fonction d'un modèle du comportement aérodynamique du drone en vol, préalablement déterminé et conservé en mémoire.

Ces modules 136, 138, 140 sont configurés pour fournir des consignes destinées à être comparées, au sein de boucles de régulation appropriées, aux données produites par les capteurs du drone (centrale inertielle 100, module de géolocalisation 162, estimateur de vitesse 154 à partir des données délivrée par une sonde de Pitot 160, baromètre 144, etc. qui évaluent à tout moment l'attitude instantanée réelle du drone, son altitude et sa vitesse air et/ou sol).

Les boucles de régulation comprennent notamment un module de correction d'attitude 148, un module de correction de vitesse 150.

Le module de correction d'attitude 148 est configuré pour fournir, en fonction de données fournies par un module de correction d'altitude 142, des données de corrections destinées à être utilisées par un module de contrôle des gouvernes 152.

Le module de contrôle des gouvernes 152 est configuré pour fournir des commandes appropriées des servomécanismes d'orientation des gouvernes 160 pour le contrôle de l'attitude du drone.

Le module de correction de correction de vitesse 150 est configuré pour fournir, en fonction de données fournies par le module de correction d'altitude 142, des données de corrections destinées à être utilisées par un module de contrôle de propulsion 156.

Le module de contrôle de propulsion 156 est configuré pour fournir des commandes appropriées du système de propulsion 158 pour le contrôle de la vitesse du drone.

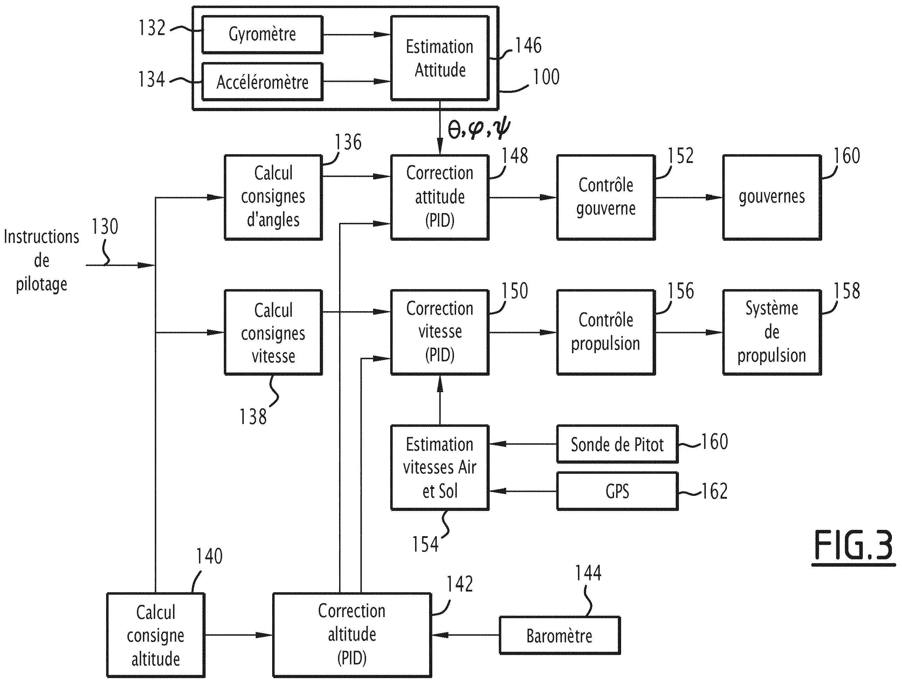

Le fonctionnement du système électronique de capture d'une vidéo 1 selon l'invention, va être à présent décrit à l'aide de la figure 4 illustrant un organigramme du procédé de capture d'une vidéo, mis en oeuvre par ordinateur.

Le procédé de capture d'une vidéo selon l'invention permet d'orienter l'axe de prise de vue de la caméra et donc la direction filmée par le drone quelle que soit la phase de vol (i.e. le scénario de vol) du drone à voilure fixe 14.

Lorsque le capteur d'image(s) 28 est associé à un objectif hypergone, il est possible d'orienter l'axe de prise de vue de la caméra avec un débattement angulaire suffisant, en particulier pour tenir compte de l'attitude (définie par le triplet d'angles de tangage, roulis et lacet) du drone représentative du scénario de vol en cours.

En particulier, le procédé de capture d'une vidéo selon l'invention permet de définir un capteur d'image(s) virtuel par sélection d'une zone Zc de dimensions réduites par rapport aux dimensions réelles du capteur d'image(s) 28.

Sur la figure 6, les images correspondant respectivement au champ d'ensemble 200 de la caméra obtenu sur le capteur d'image(s) 28, à la projection 300 de l'image obtenue par l'objectif associé au capteur d'image, et à la zone Zc dont la position est déterminée selon l'invention, sont respectivement représentées.

Lors d'une étape 106, la ou les image(s) filmée(s) en cours de vol par le drone à voilure fixe 14 sont obtenues.

Plus précisément, l'étape d'obtention d'image(s) 106 comprend une étape 108 de détermination de la position P_{Zc} de la zone Zc de dimensions réduites par rapport aux dimensions réelles du capteur d'image(s) 28 à partir de l'orientation du repère de prise de vue obtenue (110) en fonction de l'angle de roulis ϕ, de l'angle de tangage θ et/ou l'angle de lacet ψ du drone à voilure fixe 14.

En d'autres termes, la fenêtre correspondant à la zone Zc est dynamiquement déplacée dans le champ de la caméra produit par le capteur d'image(s) (28).

Plus précisément, le procédé de capture d'une vidéo selon l'invention permet de compenser les changements d'attitude du drone relatifs à des phases de vol distinctes, en sélectionnant la fenêtre correspondant à la zone Zc, la zone Zc étant une projection dans un repère de prise de vue dont l'orientation instantanée par rapport à un repère terrestre fixe est calculée en fonction de l'angle de roulis ϕ, de l'angle de tangage θ et/ou l'angle de lacet ψ définissant l'attitude du drone à voilure fixe 14.

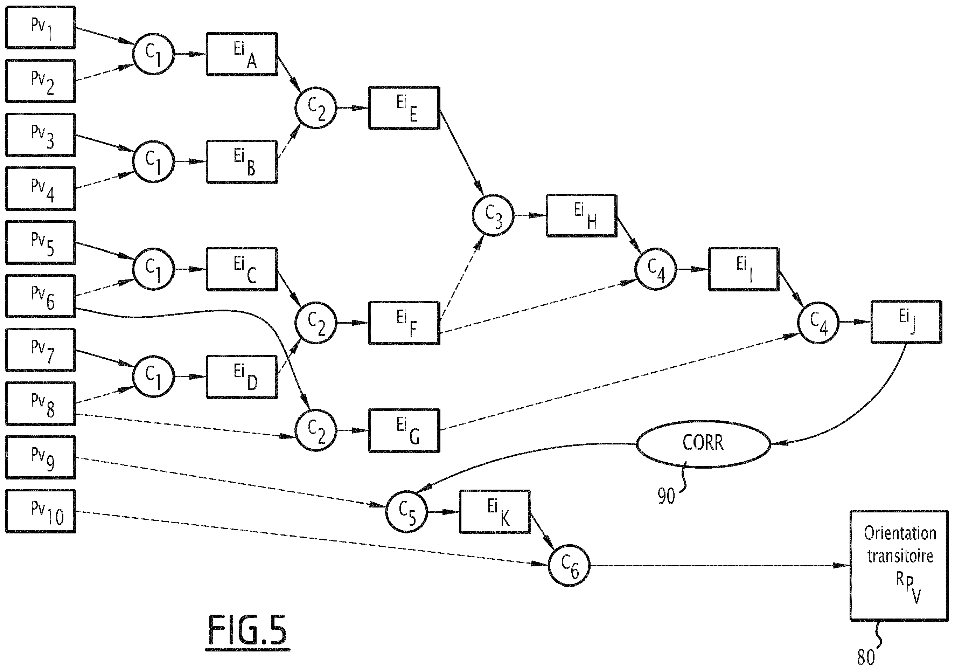

Différentes phases de vols, représentées sur la figure 5, et autant d'orientations du repère de vue associées selon l'invention sont décrites ci-après et sont mises en oeuvre isolément ou suivant toutes les combinaisons techniquement possibles conformément aux instructions de pilotage 130 de l'utilisateur 12.

Par exemple, lorsque le drone est posé, ce qui correspond à la phase de vol Pv₁₀ de la figure 5, l'orientation du repère de prise de vue est égale à celle du drone. En d'autres termes l'axe de prise de vue correspond à l'axe de la caméra, à savoir l'axe longitudinal 44 du drone à voilure fixe 14.

Au cours d'une phase Pv₉ de décollage et/ou d'atterrissage du drone à voilure fixe 14, l'orientation du repère de prise de vue est égale à celle de l'attitude en tangage, lacet et roulis du drone filtrée par un filtre passe-bas.

La fréquence de coupure d'un filtre, associé à la phase Pv₉ de décollage et/ou d'atterrissage du drone à voilure fixe 14, est par exemple de l'ordre de 0,3Hz afin de réduire les hautes fréquences sources d'oscillations lors de la restitution vidéo à l'utilisateur 12.

Lorsqu'au cours d'une phase de vol Pv₃, le drone vole selon une trajectoire rectiligne et à altitude constante, le repère de prise de vue présente un angle de roulis nul, un angle de tangage nul et un angle de lacet configuré pour orienter la prise de vue dans une direction fixe correspondant à la direction de la course du drone à la fin du dernier virage effectué par le drone à voilure fixe 14.

Lorsqu'au cours d'une phase de vol Pv₆, le drone effectue un virage, le repère de prise de vue présente un angle de roulis correspondant à une consigne de roulis suivie par le drone, un angle de tangage nul, et un angle de lacet égal à l'angle de lacet du drone filtré par un filtre passe-bas.

L'angle de roulis du repère de prise de vue, associé à la phase Pv₆ de virage en vol, est notamment compris entre -45° et +45°.

Lorsqu'au cours d'une phase de vol Pv₁, le drone effectue une ascension ou une descente selon une trajectoire rectiligne, le repère de prise de vue présente un angle de roulis nul, un angle de tangage égal à une consigne de tangage suivie par le drone, et un angle de lacet déterminé pour orienter la prise de vue dans une direction fixe correspondant à la direction de la course du drone à la fin du dernier virage effectué par le drone.

L'angle de tangage du repère de prise de vue associé à la phase Pv₁ d'ascension ou de descente selon une trajectoire rectiligne, est notamment compris entre -30° et +30°.

Lorsqu'au cours d'une phase de vol Pv₈, correspondant à la combinaison des deux phases de vol précédentes Pv₆ et Pv₁, le drone effectue une ascension ou une descente en virage, le repère de prise de vue présente un angle de roulis correspondant à une consigne de roulis suivie par le drone, un angle de tangage égal à une consigne de tangage suivie par le drone, et un angle de lacet égal à l'angle de lacet du drone filtré par un filtre passe-bas.

L'angle de roulis du repère de prise de vue associé à la phase Pv₈ d'ascension ou de descente en virage, est notamment compris entre -45° et +45° et l'angle de tangage correspondant est notamment compris entre -30° et +30°.

Lorsqu'au cours d'une phase de vol Pv₄, le drone vole selon une trajectoire rectiligne et à altitude constante et initie un virage, le repère de prise de vue présente un angle de roulis égal à une consigne de roulis suivie par le drone, un angle de tangage nul, et un angle de lacet déterminé pour orienter la prise de vue dans une direction fixe correspondant à la direction de la course du drone à la fin du dernier virage effectué par le drone.

L'angle de roulis du repère de prise de vue associé à la phase Pv₄ de vol selon une trajectoire rectiligne et à altitude constante avec initiation d'un virage, est notamment compris entre -45° et +45°.

Lorsqu'au cours d'une phase de vol Pv₂, le drone effectue une ascension ou une descente en suivant une trajectoire rectiligne et initie un virage, le repère de prise de vue présente un angle de roulis égal à une consigne de roulis suivie par le drone, un angle de tangage égal à une consigne de tangage suivie par le drone, et un angle de lacet déterminé pour orienter la prise de vue dans une direction fixe correspondant à la direction de la course du drone à la fin du dernier virage effectué par le drone.

L'angle de roulis du repère de prise de vue associé à la phase Pv₂ d'ascension ou de descente en suivant une trajectoire rectiligne avec initiation d'un virage, est notamment compris entre -45° et +45° et l'angle de tangage correspondant est notamment compris entre -30° et +30°.

L'orientation du repère de vue déterminée selon l'invention dans le cas des deux « scénarios » de vol Pv₄ et Pv₂ précédemment décrits, permet de prévenir des oscillations de l'image en début de virage.

Lorsqu'au cours d'une phase de vol Pv₅, le drone vole selon une trajectoire rectiligne et à altitude constante avec un désalignement par rapport à la trajectoire cible, le repère de prise de vue présente un angle de roulis nul, un angle de tangage nul, et un angle de lacet égal à l'angle de lacet du drone filtré par un filtre passe-bas.

Lorsqu'au cours d'une phase de vol Pv₇, le drone effectue une ascension ou une descente en suivant une trajectoire rectiligne avec un désalignement par rapport à la trajectoire cible, le repère de prise de vue présente un angle de roulis nul, un angle de tangage égal à une consigne de tangage suivie par le drone, et un angle de lacet égal à l'angle de lacet du drone filtré par un filtre passe-bas.

L'orientation du repère de vue déterminée selon l'invention dans le cas des deux « scénarios » de vol Pv₅ et Pv₇ précédemment décrits, permet de gérer les limites de stabilisation de l'image, en évitant que l'axe de prise de vue ne suive la direction de course du drone lorsque l'angle de lacet du drone diffère trop largement de l'angle de lacet associé à la trajectoire cible.

Une étape de correction 90 représentée sur la figure 5 permet également de corriger l'angle de lacet du repère de prise de vue au regard de l'angle de lacet du drone afin que la différence entre ces deux angles reste inférieure à, par exemple, 35°.

La fréquence de coupure du filtre passe-bas, associé aux types de phase de vol suivant:
- vol en virage Pv₆,
- vol en ascension ou en descente en virage Pv₈,
- vol selon une trajectoire rectiligne et à altitude constante avec désalignement Pv₅,
- vol en ascension ou en descente selon une trajectoire rectiligne avec désalignement Pv₇,
est par exemple de l'ordre de 0,5Hz afin de lisser le mouvement et réduire les hautes fréquences sources d'oscillations lors de la restitution vidéo à l'utilisateur 12.

Selon une variante, lors des types de phase de vol suivants:
- vol selon une trajectoire rectiligne et à altitude constante Pv₃, avec initiation d'un virage Pv₄, ou avec désalignement Pv₅,
- vol en virage Pv₆,
- vol en ascension ou en descente selon une trajectoire rectiligne Pv₁, avec initiation d'un virage Pv₂, ou avec désalignement Pv₇, ou encore
- vol en ascension ou en descente en virage Pv₈,
un angle de tangage saisi par l'utilisateur est le cas échéant également pris en compte (par exemple au moyen d'une addition) pour modifier l'orientation du repère de prise de vue.

Lors de la période de transition entre au moins deux orientations de repère de prise de vue associées respectivement à au moins deux phases de vols distinctes telles que précédemment décrites, l'orientation du repère de prise de vue pendant la période de transition est obtenue par application d'une interpolation linéaire sphérique (SLERP de l'anglais *Spherical Linear Interpolation)* 80 comprenant au moins une pondération par au moins un coefficient de pondération dont la valeur évolue progressivement au cours de la période de transition.

Un exemple d'obtention optimisée 80 de l'orientation transitoire du repère de prise de vue entre deux phases de vol distinctes est représentée sur la figure 5, et permet d'obtenir un lissage et une stabilisation vidéo dépourvue de saut pendant la période de transition.

Sur le schéma de la figure 5 les cercles représentent les opérations d'interpolation linéaire sphérique et le coefficient de pondération associé à chacune de ces opérations. Les flèches en trait plein et les flèches en pointillés représentent respectivement le poids associé à chaque phase de vol en entrée de l'opération d'interpolation linéaire une fois que la progression (i.e. augmentation ou diminution linéaire) de la valeur du coefficient de pondération est terminée à la fin de la période de transition.

Les opérations d'interpolation linéaire sphérique matérialisées par les cercles de la figure 5 sont mises en oeuvre simultanément ou consécutivement pour obtenir l'orientation transitoire du repère de prise de vue 80, et fournissent pour certaines un état de vol intermédiaire Ei.

Différents coefficients de pondération, représentées sur la figure 5, sont décrits ci-après et sont mis en oeuvre isolément ou suivant toutes les combinaisons techniquement possibles.

Le coefficient de pondération C1, appelé par exemple «coefficient de stabilisation en roulis» est notamment utilisé pour la transition entre :
- la phase Pv₁ d'ascension ou de descente selon une trajectoire rectiligne et la phase Pv₂ d'ascension ou de descente en suivant une trajectoire rectiligne avec initiation d'un virage, aboutissant à un état de vol intermédiaire Ei_{A},
- la phase de vol Pv₃ selon une trajectoire rectiligne et à altitude constante et la phase Pv₄ de vol selon une trajectoire rectiligne et à altitude constante avec initiation d'un virage, aboutissant à un état de vol intermédiaire Ei_{B}, ou encore
- la phase de vol Pv₅ selon une trajectoire rectiligne et à altitude constante avec un désalignement et la phase Pv₆ de virage en vol, aboutissant à un état de vol intermédiaire Ei_{c}
- la phase de vol Pv₇ d'ascension ou de descente en suivant une trajectoire rectiligne avec un désalignement et la phase Pv₈ d'ascension ou de descente en virage, aboutissant à un état de vol intermédiaire Ei_{D}.

La valeur de ce coefficient de pondération C1 est égale à un en absence de requête d'un mouvement de roulis (i.e. une commande de virage) du drone 14 par l'utilisateur 12, et nulle dans le cas contraire. Le temps de montée de la valeur du coefficient de pondération C1 est, par exemple, de l'ordre de 1,1 secondes.

Le coefficient de pondération C2, appelé par exemple « coefficient de stabilisation en tangage» est notamment utilisé pour la transition entre :
- l'état de vol intermédiaire Ei_{A} et l'état de vol intermédiaire Ei_{B} précédemment décrits, aboutissant à un état de vol intermédiaire Ei_{E},
- l'état de vol intermédiaire Ei_{C} et l'état de vol intermédiaire Ei_{D} précédemment décrits, aboutissant à un état de vol intermédiaire Ei_{F}, ou encore
- la phase Pv₆ de virage en vol et la phase Pv₈ d'ascension ou de descente en virage, aboutissant à un état de vol intermédiaire Ei_{G}.

La valeur de ce coefficient de pondération C2 est égale à un en absence de requête d'un mouvement de tangage (i.e. une commande d'ascension ou de descente du drone) du drone 14 par l'utilisateur 12, et nulle dans le cas contraire. Le temps de montée de la valeur du coefficient de pondération C2 est, par exemple, de l'ordre de 1,1 secondes. La valeur du coefficient de pondération C2 commence à diminuer en cas de requête d'un mouvement de tangage du drone 14 par l'utilisateur 12 jusqu'à devenir nulle, et à augmenter une fois la requête de mouvement de tangage réalisée.

Le coefficient de pondération C3, appelé par exemple « coefficient d'alignement» est notamment utilisé pour la transition entre l'état de vol intermédiaire Ei_{E} et l'état de vol intermédiaire Ei_{F} précédemment décrits, aboutissant à un état de vol intermédiaire Ei_{H}.

La valeur de ce coefficient de pondération C3 est nulle lorsque la valeur de l'angle de lacet du drone est trop éloignée de la valeur de l'angle de lacet associée à la direction de la course du drone, ou pendant un virage. La valeur de ce coefficient de pondération C3 est égale à 1 en cas d'un alignement ou d'un quasi alignement entre la direction de la course du drone et l'attitude du drone.

La valeur de ce coefficient de pondération C3 commence à augmenter lorsqu'après un virage, la valeur d'angle de lacet entre la direction de la course du drone et son attitude est inférieure à une valeur de verrouillage, par exemple de l'ordre de 25°, et ce sur une période de verrouillage prédéterminée.

La valeur de ce coefficient de pondération C3 diminue, jusqu'à devenir nulle, lorsque la valeur du coefficient C4 de stabilisation en virage discuté ci-après diminue, ou lorsque la valeur de l'angle de lacet formé entre la direction de la course du drone et son attitude est supérieure à une valeur correspondant à un déverrouillage, par exemple de l'ordre de 35°.

La période de verrouillage est initialisée à zéro après le premier virage et augmente de 1,5 seconde à chaque déverrouillage.

Le coefficient de pondération C4, appelé par exemple « coefficient de stabilisation en virage», est notamment utilisé pour la transition entre :
- l'état de vol intermédiaire Ei_{H} et l'état de vol intermédiaire Ei_{F} précédemment décrits, aboutissant à un état de vol intermédiaire Ei_{I}, ou
- l'état de vol intermédiaire Ei_{I} et l'état de vol intermédiaire Ei_{G} précédemment décrits, aboutissant à un état de vol intermédiaire Ei_{J}.

Le coefficient de pondération C5, appelé par exemple « coefficient de stabilisation », est notamment utilisé pour la transition entre une phase Pv₉ de décollage et/ou d'atterrissage du drone à voilure fixe 14 et l'état de vol intermédiaire Ei_{J} de vol stabilisé précédemment décrit.

La valeur de ce coefficient de pondération C5 est nulle en absence de stabilisation et, par exemple, égale à un en présence de stabilisation. Le temps de montée de la valeur du coefficient de pondération C5 est, par exemple, de l'ordre de 1,1 secondes. La valeur du coefficient de pondération C5 commence à augmenter lorsque la phase de décollage est terminée et diminue lorsque le drone amorce la phase d'atterrissage jusqu'à devenir nulle.

Le coefficient de pondération C6, appelé par exemple « coefficient de vol », est notamment utilisé pour la transition entre une phase de Pv₁₀ où le drone à voilure fixe 14 est posé et une phase Pv₉ de décollage et/ou d'atterrissage du drone à voilure fixe 14. Lorsque le drone à voilure fixe 14 est posé la valeur du coefficient de pondération C6 est nulle tandis qu'elle est, par exemple, égale à un en phase Pv₉ de décollage et/ou d'atterrissage.

Le temps de montée de la valeur du coefficient de pondération C6 est de l'ordre de deux secondes par exemple. La valeur du coefficient de pondération C6 commence à augmenter lorsqu'un seuil de vitesse au sol est dépassé par le drone en phase de décollage par exemple 6 m.s⁻¹ et décroit une fois que l'atterrissage est achevé.

Lorsque la valeur du coefficient de vol C6 est nulle, en d'autres termes lorsque le drone à voilure fixe 14 est posé, la valeur de l'ensemble des coefficients de pondération est également nulle.

L'accélération de début et de fin de période de transition est traitée par une opération de lissage, non représentée, mise en oeuvre une fois les opérations d'interpolation linéaire sphérique effectuées.

Selon un mode réalisation particulier représenté sur la figure 4, l'étape d'acquisition d'images 108 comprend l'acquisition 114 de données d'image à partir de l'ensemble du capteur d'image(s), suivie du traitement numérique 116 des données d'images délivrant des images de vidéo correspondant uniquement à la zone Zc.

En d'autres termes, selon ce mode de réalisation, le traitement numérique est effectué postérieurement à la capture des données d'images. Un tel traitement numérique permet de décaler dans le temps l'obtention d'images rectifiées à restituer à l'utilisateur.

Selon un autre mode réalisation particulier, l'étape d'acquisition d'images 108 comprend l'acquisition 118 de données d'images uniquement dans la zone Zc au cours de la réalisation de la vidéo, la position P_{Zc} de la zone Zc étant déterminée au cours de la réalisation de la vidéo.

En d'autres termes, selon cet autre mode de réalisation, la sélection de la zone Zc est mise en oeuvre en temps réel et est asservie en temps réel à l'orientation du repère de prise de vue définie en fonction d'au moins un angle d'attitude du drone à voilure fixe 14.

Le procédé de capture d'une vidéo selon l'invention permet alors, d'optimiser le pilotage du drone grâce à l'asservissement, de la position de la zone Zc à l'orientation du repère de prise de vue définie en fonction d'au moins un angle d'attitude du drone à voilure fixe 14 de sorte à délivrer en temps réel les images filmées par le drone sur lesquelles l'utilisateur 12 base son pilotage.

Les images obtenues à l'aide de la caméra embarquée sur le drone à voilure fixe 14 sont restituées sous forme stabilisée, notamment via l'utilisation du système de visualisation en réalité virtuelle 10.

Le procédé de capture d'une vidéo selon l'invention permet en conséquence d'améliorer l'ergonomie de la vision immersive (également appelée « vision FPV » de l'anglais *First Person View).*

« L'expérience utilisateur » en configuration de pilotage immersif permet donc à l'utilisateur 12 d'optimiser son pilotage car la prise de vue est optimale quelle que soit la phase de vol du drone.

## Revendications

1. Procédé de capture d'une vidéo à l'aide d'une caméra embarquée sur un drone (14) à voilure fixe, la caméra comprenant un capteur d'image(s) (28), le drone (14) à voilure fixe comprenant une centrale inertielle (56) configurée pour mesurer l'angle de roulis, l'angle de tangage et/ou l'angle de lacet du drone à voilure fixe,
le procédé comprenant l'obtention (106) d'image(s) correspondant à une zone du capteur de dimensions réduites par rapport à celles du capteur et associée à un repère de prise de vue, la position de la zone étant déterminée (108) à partir de l'orientation du repère de prise de vue obtenue (110) en fonction de l'angle de roulis, de l'angle de tangage et/ou de l'angle de lacet du drone à voilure fixe.

2. Procédé selon la revendication 1, dans lequel, lorsque le drone (14) est posé (Pv₁₀), l'orientation du repère de prise de vue est égale à celle du drone.

3. Procédé selon la revendication 1 ou 2, dans lequel au cours d'une phase de décollage (Pv₉), du drone (14) et/ou au cours d'une phase d'atterrissage (Pv₉) du drone (14), l'orientation du repère de prise de vue est égale à l'attitude du drone (14) filtrée par un filtre passe-bas.

4. Procédé selon l'une quelconque des revendications précédentes dans lequel, lorsque le drone (14) vole selon une trajectoire rectiligne et à altitude constante (Pv₃), le repère de prise de vue présente un angle de roulis nul, un angle de tangage nul et un angle de lacet configuré pour orienter la prise de vue dans une direction fixe correspondant à la direction de la course du drone à la fin du dernier virage effectué par le drone (14).

5. Procédé selon l'une quelconque des revendications précédentes, dans lequel, lorsque le drone (14) effectue un virage (Pv₆), le repère de prise de vue présente un angle de roulis correspondant à une consigne de roulis suivie par le drone, un angle de tangage nul, et un angle de lacet égal à l'angle de lacet du drone (14) filtré par un filtre passe-bas.

6. Procédé selon l'une quelconque des revendications précédentes, dans lequel, lorsque le drone effectue une ascension ou une descente selon une trajectoire rectiligne (Pv₁), le repère de prise de vue présente un angle de roulis nul, un angle de tangage égal à une consigne de tangage suivie par le drone, et un angle de lacet déterminé pour orienter la prise de vue dans une direction fixe correspondant à la direction de la course du drone à la fin du dernier virage effectué par le drone (14).

7. Procédé selon l'une quelconque des revendications précédentes, dans lequel, lorsque le drone (14) effectue une ascension ou une descente en virage (Pv₈), le repère de prise de vue présente un angle de roulis correspondant à une consigne de roulis suivie par le drone, un angle de tangage égal à une consigne de tangage suivie par le drone, et un angle de lacet égal à l'angle de lacet du drone filtré par un filtre passe-bas.

8. Procédé selon l'une quelconque des revendications précédentes, dans lequel, lorsque le drone (14) vole selon une trajectoire rectiligne et à altitude constante et initie un virage (Pv₄), le repère de prise de vue présente un angle de roulis égal à une consigne de roulis suivie par le drone, un angle de tangage nul, et un angle de lacet déterminé pour orienter la prise de vue dans une direction fixe correspondant à la direction de la course du drone à la fin du dernier virage effectué par le drone.

9. Procédé selon l'une quelconque des revendications précédentes, dans lequel, lorsque le drone (14) effectue une ascension ou une descente en suivant une trajectoire rectiligne et initie un virage (Pv₂), le repère de prise de vue présente un angle de roulis égal à une consigne de roulis suivie par le drone (14), un angle de tangage égal à une consigne de tangage suivie par le drone (14), et un angle de lacet déterminé pour orienter la prise de vue dans une direction fixe correspondant à la direction de la course du drone à la fin du dernier virage effectué par le drone (14).

10. Procédé selon l'une quelconque des revendications précédentes, dans lequel, lorsque le drone vole selon une trajectoire rectiligne et à altitude constante avec un désalignement (Pv₅) par rapport à la trajectoire cible, le repère de prise de vue présente un angle de roulis nul, un angle de tangage nul, et un angle de lacet égal à l'angle de lacet du drone (14) filtré par un filtre passe-bas.

11. Procédé selon l'une quelconque des revendications précédentes, dans lequel, lorsque le drone effectue une ascension ou une descente en suivant une trajectoire rectiligne avec un désalignement (Pv₇) par rapport à la trajectoire cible, le repère de prise de vue présente un angle de roulis nul, un angle de tangage égal à une consigne de tangage suivie par le drone (14), et un angle de lacet égal à l'angle de lacet du drone (14) filtré par un filtre passe-bas.

12. Procédé selon l'une quelconque des revendications précédentes, dans lequel lors de la période de transition entre au moins deux orientations de repère de prise de vue associées respectivement à au moins deux phases de vols, l'orientation du repère de prise de vue pendant la période de transition est obtenue par application d'une interpolation linéaire sphérique comprenant au moins une pondération par au moins un coefficient de pondération dont la valeur évolue progressivement au cours de la période de transition.

13. Produit programme d'ordinateur comprenant des instructions logicielles pour la mise en oeuvre d'un procédé selon l'une quelconque de revendications précédentes.

14. Système électronique de capture d'une vidéo (1) comprenant un drone à voilure fixe et une caméra embarquée sur le drone, la caméra comprenant un capteur d'image(s), le drone (14) à voilure fixe comprenant une centrale inertielle configurée pour mesurer l'angle de roulis, l'angle de tangage et/ou l'angle de lacet du drone à voilure fixe ,
**caractérisé en ce que** le système électronique de capture vidéo comprend en outre un module d'obtention (62) configuré pour obtenir au moins une image correspondant à une zone (Zc) du capteur de dimensions réduites par rapport à celles du capteur et associée à un repère de prise de vue, le module d'obtention (62) étant configuré pour déterminer la position (P_{Zc}) de la zone à partir de l'orientation du repère de prise de vue obtenue en fonction de l'angle de roulis, de l'angle de tangage et/ou de l'angle de lacet du drone à voilure fixe.
